# EUROPEAN PATENT SPECIFICATION

(11) **EP 0 838 078 B1**
(45) Date of publication and mention of the grant of the patent: **22.12.1999**
(21) Application number: 96923148.9
(22) Date of filing: 01.07.1996
(51) Int. Cl.: H01G 4/015

(54) **METAL COATED FILM**
METALLBESCHICHTETER FILM
FILM REVETU DE METAL

(30) Priority: 13.07.1995 SE 9502589
(43) Date of publication of application: 29.04.1998
(73) Proprietor: Evox Rifa Aktiebolag, 391 29 Kalmar (SE)
(72) Inventor: RINGDAHL, Lennart, S-388 96 Ljungbyholm (SE); ELFWING, Erik, S-386 30 Färjestaden (SE); EKSTAM, Lars, S-380 62 Mörbylanga (SE); TORDSSON, Göran, S-388 97 Halltorp (SE)
(74) Representative: Fagerlin, Heléne
(86) International application number: SE9600881
(87) International publication number: WO9703452

(56) References cited:
- EP-A- 0 450 455

## Description

The present invention relates to a safety function, i.e. a fuse function, on a film for the manufacturing of capacitors, a metallized film intended for the manufacturing of capacitors of the type described in the preamble of claims 1 and 3. The invention relates also to a coiled or stacked capacitor manufactured therefrom.

### Prior art

Coiled self-healing capacitors produced from whole or partially metallized paper or plastic films are known in the prior art. The electrodes of the capacitors are formed from the metal, and the film forms the dielectric. The plastic films which are used can be e.g. polyester, polypropene, polycarbonate, polystyrene, polyphenyl sulphide or the like. Suitable materials as a base for the metal are all those which can be metallized, coiled and which have suitable dielectric constants in order to be used as a dielectric in the capacitor. Mixed films of plastic and paper also exist.

It is known to produce patterns of metal-free areas in the surface of the metallized film which form the dielectric and the electrodes in the capacitor. In this manner the capacitors can be divided into partial capacitors which can be arranged in series or in parallel. Normally the capacitors are of the so-called self-healing type. By self-healing it is meant that in the event of a possible flash-over in the capacitor the metal coating around the flash-over place vaporizes and a possible short circuit is prevented.

A known problem of the above mentioned type of capacitor is that despite the above mentioned self-healing property, damage can occur in which the capacitor is to a large extent or even completely destroyed, even if the cause of the damage is a local flash-over. Even if during production of the capacitor, the metallized films are designed so that their electrical characteristics are such that with a flash-over in the dielectric, the metallization vaporizes to such an extent that a controlled burnt-out region occurs around the disruptive discharge channel, large damage can occur on both the metallization and the film itself. The damage produced depends naturally to a large extent on how high the temperature locally generated by the damage is. In many cases the vaporized area can be so large that the capacitor is destroyed.

It is known from the German Laid-Open Application 1 150 762 to produce patterns on metallized dielectric films intended for the production of capacitors. According to this document a metal layer is laid down on the film and thereafter the pattern is produced by grinding out a pattern made of a metal-free surface. In this process there is, however, an obvious risk of producing unevenness in the metal coating which in itself is a potential risk that damage of the flash-over type shall occur.

It is also known to arrange coiled partial capacitors in series from amongst others EP-A1-0 225 822, in which can be seen melting zones, fuse areas, intended in the case of flash-over or the like in the capacitor to melt so that the damaged area is isolated, EP-A1-0 228 924, in which the electrode regions have a much higher resistivity than the regions which merely form the electrically conductive connections, EP-A1-0 611 179, in which metallized plastic films have locally demetallized zones which separate parallellogram-shaped surfaces with a surface area of approximately 1 cm².

US-A-5 136 462 (=EP-A2-0 450 455) describes in addition how attempts have been made in a number of patents to solve the problems which occur when flash-over and short circuits occur in capacitors of the above type. In amongst others EP-A1-0 243 288 it has been suggested that the metal coating should be divided in the longitudinal direction of the film by openings which extend essentially over the whole of the width of the film and in this way form metallized tongue-shaped pieces. wherein the coating has a greater thickness at the connection end in order to facilitate connection and whereby at least one of the two capacitor layers in the region of the ends of the dividing openings has a reduced thickness. In the event of an unfavourable electrical load one or more of these regions, fuse regions. with reduced thicknesses is burnt away and the damage parts isolated.

It has, however, proven to be difficult to apply these areas with varying thicknesses and the necessary and desirable tolerances are difficult to achieve.

It has also been suggested that with the above described tongues which are formed through transverse openings, the base of the tongues should be tapered so that only a narrow connection remains which can easily be burnt away. These narrow connections can be considered as fuses. The possible loss of electrode surface will be dependent on how big these tongue-shaped areas are, and if the number of transverse openings is increased in order to minimize possible losses then this means that the capacitor becomes more bulky. i.e. in order to produce the same electrode surface, a longer metallized film is required.

Because of the above reasons, in the above mentioned US-A-5 136 462 it has been suggested to divide the film into surface elements with small surfaces by arranging narrow openings with rounded ends, whereby at each end bridges with a narrower width than the openings can be found which conductively connect the surface elements. This is a solution which is different from those shown earlier because the electrode surface of the capacitor essentially forms a single surface, i.e. the capacitor is not divided up into series or parallel coupled partial capacitors. With a too high local current density, one or more of these bridges around one or more of the surface elements is burnt away and these surfaces are isolated from the capacitor with only a smaller loss of capacitor electrode surface as a consequence. The bridges constitute here a sort of fuse which insures that the damaged region is isolated and the rest of the capacitor can continue to function.

It is now apparent that, despite the arrangement of the above described fuses, there is a risk of damage occurring because of an unfavourable current density distribution in the fuse region.

### Purpose of the present invention

The main purpose of the present invention is to produce a capacitor which takes up a small volume, i.e. where the surface of the metallized film is used to a maximum, and to produce a safe, self-healing capacitor which has a good safety function.

Yet a further object of the present invention is to produce a capacitor in which damage, which possibly occurs due to an overload, is isolated in a controlled manner, and in this way the risk of possible explosion and/or fire is minimized.

These and other objects, which will be obvious from the continued description, are achieved according to the invention with the use of a film of the type which is mentioned in the characterizing part of claim 1. Further characteristics and developments of the arrangement according to the invention are mentioned in the other patent claims.

### Short description of the drawings

In order for the present invention to be easily understood and carried out, it will be described with reference to the following drawings, where:

Figs 1a and 1b show a schematic view of metallized films according to the invention, which films are intended for a series construction.

Figs 2a and 2b show a section through the film at line I - I in Figs 1a and 1b.Fig 2c show the corresponding circuit diagram symbols.

Figs 3a and 3b show a schematic view of the metallized metal film intended for a single construction.

Figs 4a and 4b show a section through the films at line II - II in Figs 3a and 3b.

Fig 4c shows the corresponding circuit diagram symbols.

Figs 5a and 5b show a schematic view of metallized metal films intended for a series construction with three partial capacitors.

Figs 6a and 6b show a section through the films at line III - III in Figs 5a and 5b.

Fig 6c shows the corresponding circuit diagram symbols.

Figs 7a and 7b show a schematic view of metallized metal films intended for a series construction with four partial capacitors.

Figs 8a and 8b show a section through the films at line IV - IV in Figs 7a and 7b.

Fig 8c shows the corresponding circuit diagram symbols.

Fig 9 shows a simulated current density at a fuse function according to the state of the art.

Fig 10 shows a simulated current density at a fuse function according to the invention.

Fig 11 shows an enlargement of the fuse function shown in Fig 9.

Fig 12 shows an enlargement of the fuse function shown in Fig 10.

### Description of a first embodiment of the invention

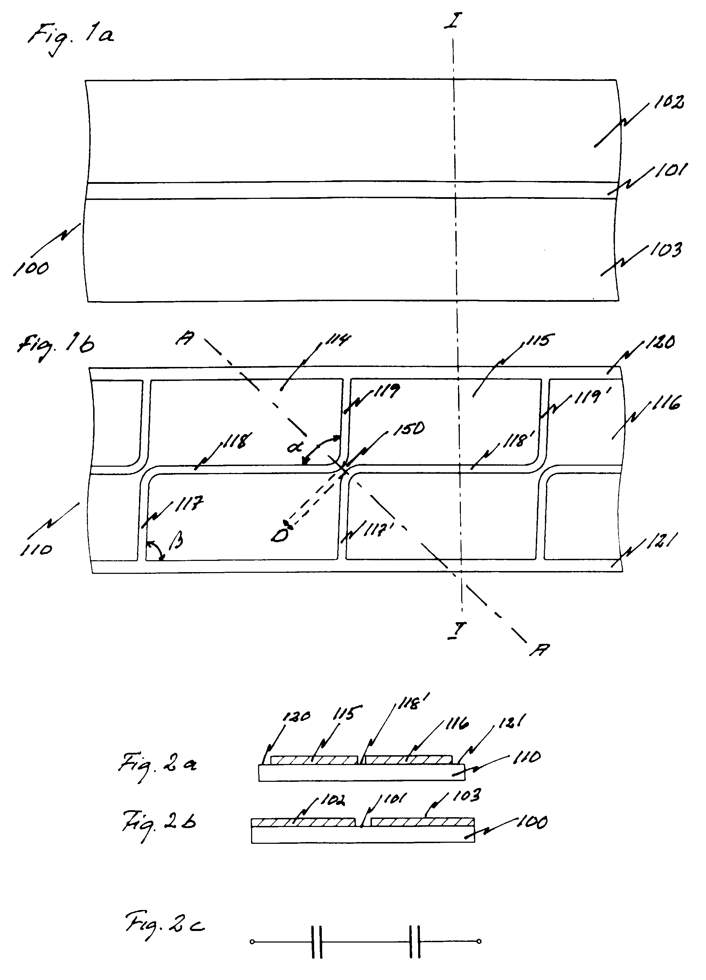

A first embodiment of the invention is shown in Figs 1 - 2. On the films 100 and 110, which form the dielectric of the capacitor, metallized surfaces are arranged which are divided into segments through certain areas being left metal-free during the metallization. These metal-free areas can naturally be produced by alternative means. The film 100 shown in Fig la has two metallized segments 102,103, separated by a metal-free region 101 extending along the film, and the film 110 shown in Fig 1b has a metallized surface divided by means of narrow elongated metal-free regions, essentially formed from the three parts 117,118,119;117',118',119', which extend from one edge of the film to the other, into essentially similarly shaped segments following one another 114,115,116. Along the edges of the film 110 there also extend two continuous metal-free edge regions 120,121. The parts 117,118,119;117',118',119' of the elongated metal-free continuous regions are placed so that the first 117;117' and the third 119;119' parts are essentially displaced in parallel with respect to each other and form an angle β with the longitudinal direction of the band. The second part 118;118' extends essentially in the longitudinal direction of the film. In the transition between the different parts, the elongated metal-free regions 117,118,119;117',118',119' extend in a gentle curve. The longitudinal extensions of parts 117 and 118 resp. 118 and 119 form in consequence an angle α with each other which is greater or equal to 90°, whereby the sum of the angles α + β = 180°.

By forming and placing parts 117,118,119 resp. 117',118',119' after each other in the longitudinal direction of the film, the metallized segments formed in this way will be divided into two parts diagonally displaced with respect to each other separated by an elongated constricted region, whereby the diagonally displaced parts will form essentially mirror images of each other with reference to a line through the narrowest part 150 of the elongated region, perpendicular to the longitudinal direction of the region. This part 150 forms the fuse function according to the invention. It is evident from the Figures that the angle α influences the length of the elongated region. Through varying the angle α the fuse region can be designed so that a desired current distribution and fuse function can be achieved.

The above mentioned metal-free surfaces 120,121 along the edges of the film 110 are intended to ensure that during forming of the contacts the metallized surfaces of the film 110 do not come into contact with the electrical contacts of the capacitor.

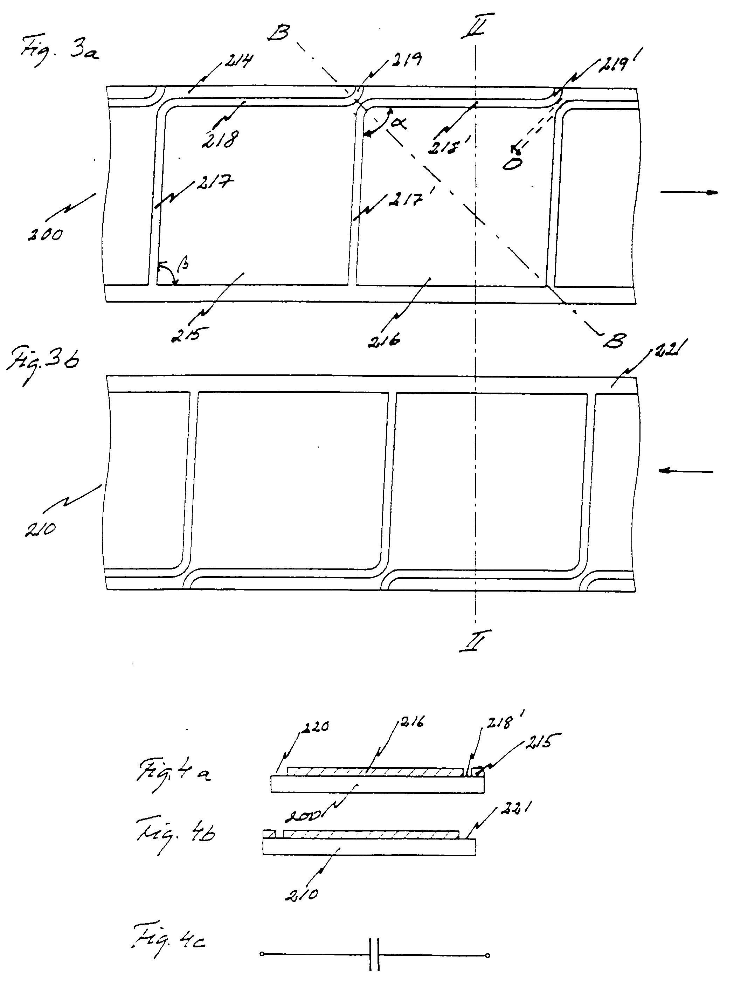

Figs 2a resp. 2b show the films 100 and 110 according to Figs 1a resp. 1b placed above one another, as they are placed before coiling of the capacitors, in a section along a line I - I in Figs 1a and 1b.

By comparison of the distribution of the metal coating on the films 100 resp. 110, it is evident that the fuse function 150 on film 110 is so placed that it always corresponds to a capacitively inactive surface, i.e. a metal-free surface, on film 100. This positioning of the fuse function forms part of the invention and corresponding positioning can be found in all the examples below. even if it is not mentioned.

During the production of a capacitor with the use of the above mentioned films, a film 110 is placed on a a film 100 and thereafter these films are coiled into a roll. Film 110 is preferably narrower than film 100 because of the above given reason. In this way coiled capacitors are formed. During the manufacturing of stacked capacitors, films 100 and 110 are coiled in the same way but around an object with a large radius. Subsequently, a contact layer of metal is formed using known techniques. e.g. flame-spray ing, on the part of the coiled capacitor which is formed from both of the long sides of film 100. Finally, these capacitors are cut into appropriate sizes, and connection contacts are arranged. As mentioned above, film 110 is narrower than film 100, whereby the metallized segments 114, 115 resp. 116 will not be affected by the sprayed metal. i.e. film 110 will not have contacts formed on it during the shaping of the capacitor.

### Description of a second embodiment of the invention

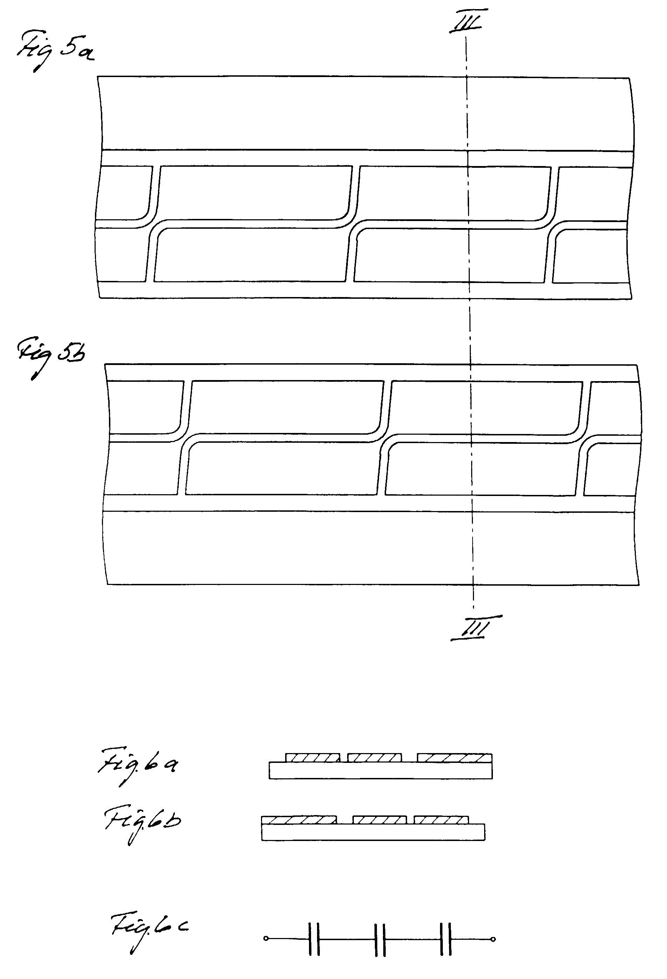

A second embodiment of the invention is shown in Figs 3 - 4. There are similarly arranged metallized surfaces 214, 215 resp. 216 on the films 200 and 210 which form the dielectric of the capacitor.

The two films 200 and 210 shown are essentially similar, and as is shown in Figs 3a and 3b they are placed in opposing directions in relation to each other. The directions of the films are shown in the Figures by arrows.

Only the film shown in Fig 3a is described below since the film in Fig 3b is an identical film. The film 200 has a metallized surface divided by means of narrow elongated metal-free regions, essentially formed of three parts 217,218,219;217', 218', 219', which extend from one edge of the film to the other edge into essentially similarly shaped segments 214, 215 resp. 216 following each other. The first 217 and the third 219 parts of these parts are essentially displaced in parallel with respect to one another, and their extensions form an angle β with the longitudinal direction of the band, and wherein the second part 218 extends in the longitudinal direction of the film. This part 218 is, however, placed nearer one edge of the film, i.e. non-symmetrically in relation to the two edges of the film. In the transition between the different parts the longitudinal metal-free region extends in a gentle curve. The longitudinal directions of parts 217 and 218 resp. 218 and 219 form consequently an angle α with each other which is equal to or greater than 90°, whereby the sum of the angles α + β = 180°.

The films 200 resp. 210 have a metal-free region 220 resp. 221 extending along one edge of the film.

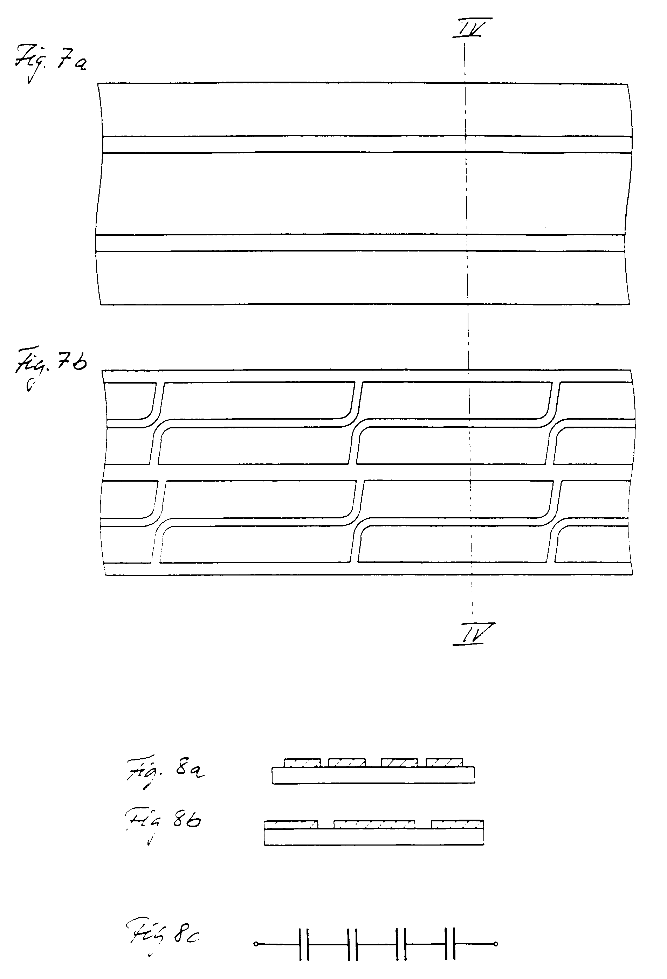

Figs 4a resp. 4b show films 200 and 210 according to Figs 3a resp. 3b placed above one another, as they are positioned before the coiling of capacitors, in a section along a line II - II in Figs 3a and 3b.

Coiled or stacked capacitors can subsequently be made from these films in the above described matter with the difference that as the films are laterally displaced in relation to one other, every second layer will be contacted on one side of the coiled or stacked capacitor and the other layers will be contacted on the opposing side.

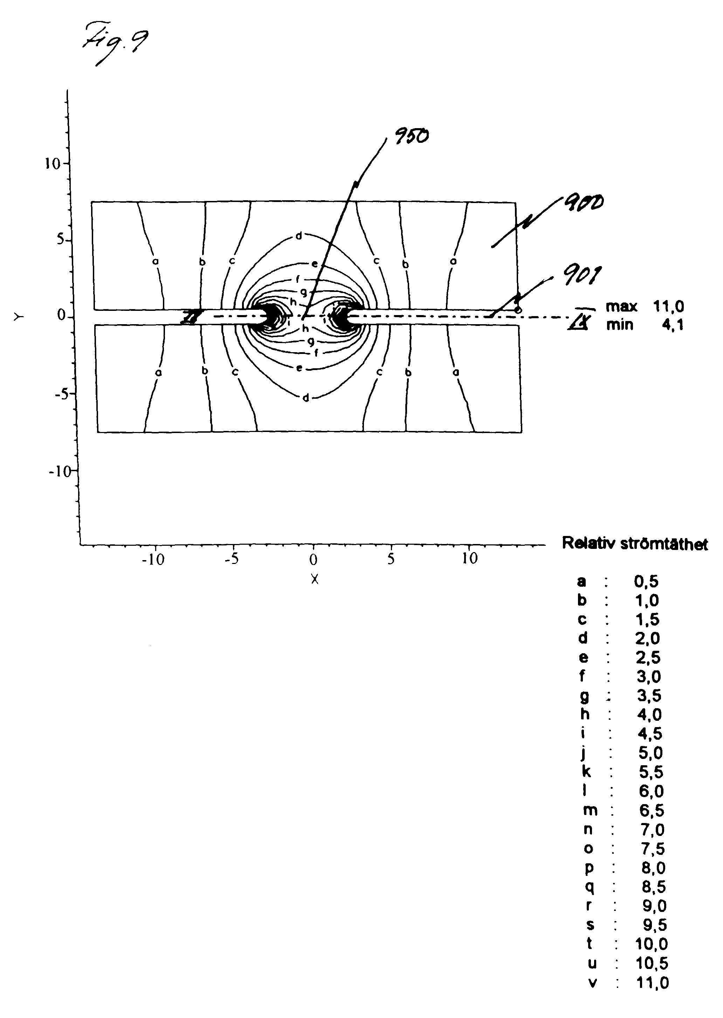

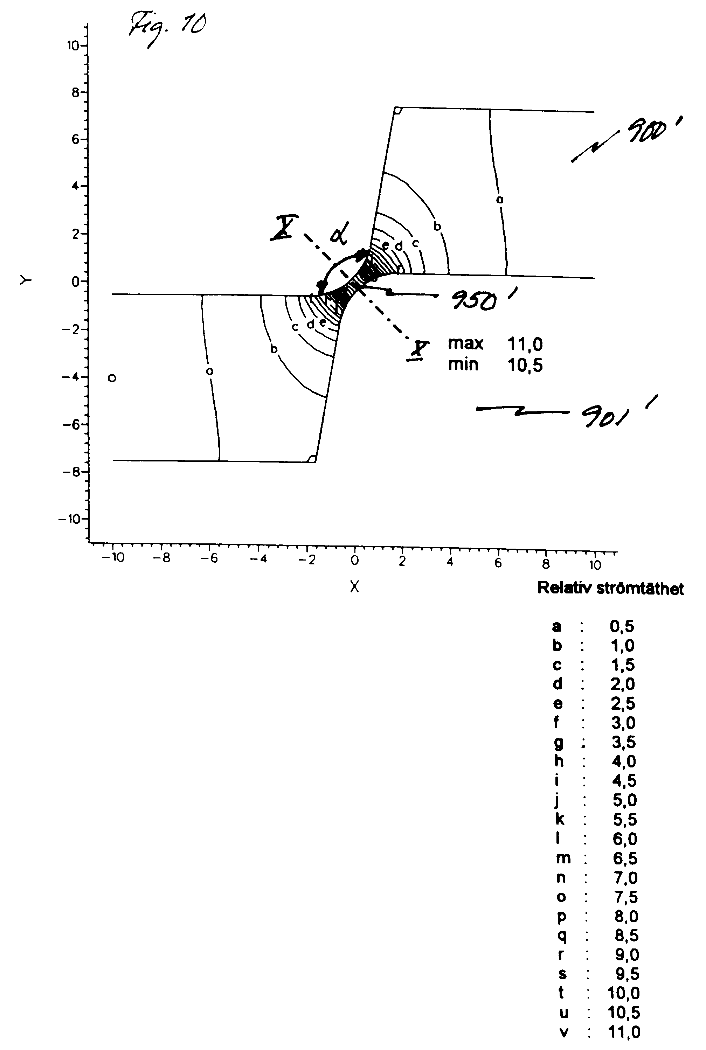

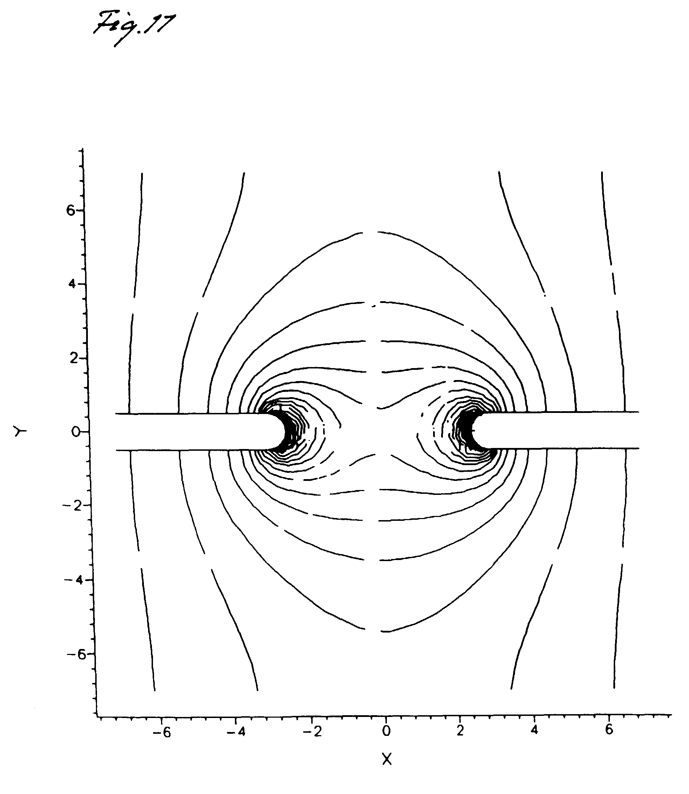

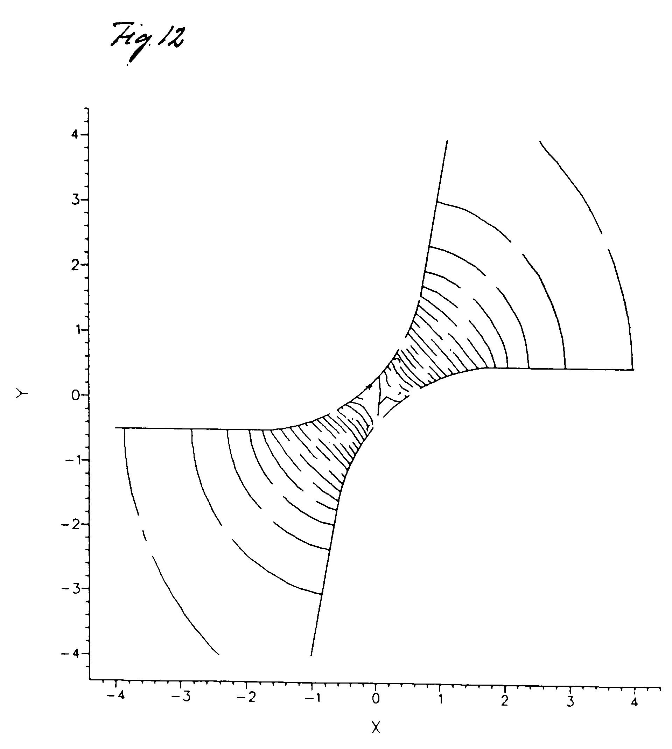

Figs 5a and 5b and Figs 7a and 7b show schematically an extended series construction and Figs 6a and 6b, and 8a and 8b sections through the films on lines III - III in Figs 5a and 5b resp. lines IV - IV in Figs 7a and 7b. The pattern of the metallized segments and metallized surfaces are built up in the same way as in the earlier described pattern for series construction according to Figs 1a and 1b. and Figs 2a and 2b.

The films according to the invention have preferably a width of between 5 to 100 mm, one or two metal-free edges 110, 121, 220, 221 along the longitudinal edges of the films with a width of approximately 0,5 - 5 mm, a shortest distance D (shown in Figs 1b and 3a) between two following longitudinal regions 117, 118, 119; 217, 218, 219 at the connecting curved parts of approx. 0,1 - 10 mm, a bending radius of the curved parts of approx. 1 - 10 mm, the distance along the film edge between two consecutive longitudinal regions can preferably vary between 5 - 100 mm.

The angle a which is formed between two parts following each other of the longitudinal region is 90° or greater, preferably between 90° and 135°, most preferably 100° to 120°.

Fig 9 shows the simulated values of the relative current density in a fuse region according to the prior art. The metallized surface represented by 900, the metal-free region by 901 and the fuse region by 950. The current densities given in the table are given in relative terms. It can be seen that the current density is extremely high but unequally distributed in the fuse region 950. Along a central line IX - IX through the fuse region the relative current density varies between 4.1 and 11.0. With a reduction of the width of the slits the above effect becomes even more pronounced. In order that a fuse with this shape should bring about the desired effect, care must be taken so that the minimum value does not become too low, because in such a case the fuse function cannot achieve its object. This means also that a possible maximum value can climb so high that the security and function of the fuse function is put into jeopardy and the desired security is not achieved. It is consequently difficult to produce a fuse with exactly specified characteristics in this embodiment.

It has now surprisingly been shown that in the embodiment according to the invention, see Fig 10, a current density distribution in the fuse region which is much more advan-tageous than that shown earlier for an arrangement according to the prior art (Fig 9) is achieved. Fig 10 shows simulated values of the relative current density in a fuse region according to the invention. The metallized surface is represented by 900', metal-free regions by 901' and the fuse region by 950'. The current densities given in the table are given in relative terms. It can be seen that the current density is extremely high but equally distributed in the fuse region 950'. Along a central line X - X through the fuse region, the relative current density varies between 10.5 and 11.0. This means that with an embodiment of the fuse according to the invention it is easy to achieve a controlled burning-out and to design the fuse region so that with a high degree of certainty the current density is achieved at which a controlled burning-out of the fuse function occurs. Through changing the angle α the relative length of the fuse can be regulated and thereby indirectly the current density reached in the region 950'.

In this way consequently a current strength can be achieved which is sufficient to burn out the fuse but which does not locally go to such high values that damages occur to the surroundings. Through the elongated shape of the fuse region the fuse in the individual cases can be dimensioned with a greater precision than in the case illustrated by the prior art. Neither are the tolerances during manufacturing as small as they are with the arrangements manufactured according to the prior art. because of the elongated shape of the fuse.

The fuse function, the metallized film having such a fuse, and capacitors manufactured from these films according to the invention, which are described above with reference to the described embodiments, can naturally be modified within the scope of the appended claims.

## Claims

1. A metallized band-shaped film with a safety fuse, said metallisation to be used as a conductor of electricity, on which film the metallization is divided into a number of metallized, electrically conductive segments separated by metal-free regions, **characterized** in that a number of the electrically conductive segments (114,115,116; 214, 215, 216; 900') are each divided into at least two with respect to each other diagonally displaced parts by means of an elongated constricted region (150; 250; 950'), which region forms a fuse, said region being so arranged that the constriction is essentially mirror-symmetrically shaped with respect to a line (A - A; B - B; X - X) in the plane of the film, which line passes through the narrowest part of the fuse (150; 250; 950') and is perpendicular to the longitudinal direction of the fuse (150; 250; 950').

2. Metallized band-shaped film for use in the manufacturing of self-healing capacitors, **characterized** in that it comprises at least one safety fuse according to claim 1

3. Metallized band-shaped film for use in the manufacturing of self-healing capacitors, said film comprising at least one safety fuse, whereat the metallization is divided into segments boarded by at least two elongated metal-free regions, **characterized** in that at least one metal-free edge region (120, 220) is arranged in the longitudinal direction of the film, that the first elongated metal-free region has at least three parts, a first (117, 217), a second (118, 218) and a third (119, 219) part, said elongated metal-free region extending from the metal-free edge region (120, 220) arranged along the first longitudinal edge of the film to a second position lying at a predetermined distance from the first longitudinal edge of the film, whereby the first (117, 217) and third (119, 219) parts bordering the second part extend in a non-parallel direction with the longitudinal direction of the film, thus forming an angle β with the longitudinal direction of the film and an angle α with said second part (118, 218), which parts are mutually displaced in parallel and whereby the second part (118, 218) extends in a direction essentially parallel with the longitudinal direction of the film, and that the second elongated metal-free region (117', 118', 119'; 217', 218', 219'), which has essentially the same shape, is arranged displaced in parallel in the longitudinal direction of the film with respect to the first elongated region, whereby between the elongated regions (117,118,119; 217, 218, 219 and 117',118',119'; 217', 218', 219') there are essentially a first and a second continuous curved connecting part, whereat each second curved part from the first elongated region and a first curved part from the second elongated region between themselves define an elongated constricted region (150; 250; 950'), which region forms a safety fuse.

4. Film according to Claim 3, **characterized** in that the angle α between two parts of the elongated region following directly after each other, is 90° or greater, preferably between 90° and 135°, most preferably 100° to 120°.

5. A coiled or stacked self-healing capacitor, **characterized** in that it comprises at least one metallized band-shaped film according to claims 2 to 4.

6. Self-healing capacitor, coiled or stacked, comprising at least one safety fuse, said capacitor shaped from at least one metallized band-shaped film for use during the manufacturing of self-healing capacitors, whereby the metallization is divided into segments bordered by at least two elongated metal-free areas characterized in that a number of the electrically conducting segments (114,115,116; 214, 215, 216; 900'), each being divided by means of an elongated constricted region (150; 250; 950') into at least two parts diagonally displaced in the direction of the film with respect to each other, said constricted region, constituting the safety fuse, being arranged so that the constriction is essentially mirror-symmetrically shaped with respect to a line (A - A; B - B; X - X) in the plane of the film, which line passes through the narrowest part of the fuse region (150; 250; 950') and is perpendicular to the longitudinal direction of the fuse region.

7. Self-healing capacitor according to any of Claims 5 to 6, **characterized** in that one film is combined with a second metallized film, which has capacitively non-active regions arranged in contact with the fuse function of the first film.

## Patentansprüche

1. Metallisierter, bandförmiger Film mit einer Sicherheitsschmelzsicherung, wobei die Metallisierung als elektrischer Leiter verwendet werden soll, und auf dem Film die Metallisierung in eine Anzahl metallisierter, elektrisch leitfähiger Segmente unterteilt ist, die durch metallfreie Bereiche getrennt sind, dadurch gekennzeichnet, daß eine Anzahl der elektrisch leitfähigen Segmente (114, 115, 116; 214, 215, 216; 900') jeweils in zumindest zwei in Bezug aufeinander diagonal verschobene Teile mit Hilfe eines länglichen, verengten Bereichs (150; 250; 950') unterteilt sind, wobei der Bereich eine Schmelzsicherung bildet, und der Bereich so angeordnet ist, daß die Verengung im Wesentlichen spiegelsymmetrischförmig in Bezug auf eine Linie (A-A; B-B; X-X) in der Ebene des Films ausgebildet ist, wobei die Linie durch den engsten Teil der Schmelzsicherung (150; 250; 950') hindurch geht, und senkrecht zur Längsrichtung der Schmelzsicherung (150; 250; 950') verläuft.

2. Metallisierter, bandförmiger Film zur Verwendung bei der Herstellung selbstheilender Kondensatoren, dadurch gekennzeichnet, daß er zumindest eine Sicherheitsschmelzsicherung nach Anspruch 1 enthält.

3. Metallisierter, bandförmiger Film zur Verwendung bei der Herstellung selbstheilender Kondensatoren, wobei der Film zumindest eine Sicherheitsschmelzsicherung aufweist, und die Metallisierung in Segmente unterteilt ist, die durch zumindest zwei längliche, metallfreie Bereiche begrenzt werden, dadurch gekennzeichnet, daß zumindest ein metallfreier Randbereich (120, 220) in der Längsrichtung des Films angeordnet ist, daß der erste längliche, metallfreie Bereich zumindest drei Teile aufweist, ein erstes (117, 217), ein zweites (118, 218) und ein drittes Teil (119, 219), wobei der längliche, metallfreie Bereich von dem metallfreien Randbereich (120, 220), der entlang dem ersten Längsrand des Films angeordnet ist, zu einer zweiten Position verläuft, die einer vorbestimmten Entfernung von dem ersten Längsrand des Films vorgesehen ist, wodurch das erste (117, 217) und das dritte Teil (119, 219), welche das zweite Teil begrenzen, in einer nicht parallel zur Längsrichtung des Films verlaufenden Richtung verlaufen, wodurch ein Winkel β zur Längsrichtung des Films und ein Winkel a mit dem zweiten Teil (118, 218) ausgebildet werden, wobei diese Teile gegeneinander parallel verschoben sind, und das zweite Teil (118, 218) in einer Richtung im wesentlichen parallel zur Längsrichtung des Films verläuft, und daß der zweite, längliche, metallfreie Bereich (117', 118', 119'; 217', 218', 219'), der im wesentlichen die selbe Form aufweist, in Längsrichtung des Films in Bezug auf den ersten länglichen Bereich parallel verschoben angeordnet ist, wodurch zwischen den länglichen Bereichen (117, 118, 119; 217, 218, 219 und 117', 118', 119'; 217', 218', 219') im wesentlichen ein erstes und ein zweites, kontinuierlich gekrümmtes Verbindungsteil vorgesehen sind, wobei jedes zweite gekrümmte Teil von dem ersten länglichen Bereich und ein erstes gekrümmtes Teil von dem zweiten länglichen Bereich zwischen diesen Teilen einen länglichen, verengten Bereich (150; 250; 950') ausbilden, welcher eine Sicherheitsschmelzsicherung bildet.

4. Film nach Anspruch 3, dadurch gekennzeichnet, daß der Winkel a zwischen zwei Teilen des länglichen Bereiches, welche direkt aufeinander folgen, 90° oder größer ist, vorzugsweise zwischen 90° und 135° liegt, und besonders bevorzugt zwischen 100° bis 120°.

5. Gewickelter oder gestapelter, selbstheilender Kondensator, dadurch gekennzeichnet, daß er zumindest einen metallisierten, bandförmigen Film nach den Patentansprüchen 2 bis 4 aufweist.

6. Selbstheilender Kondensator, gewickelt oder gestapelt, der zumindest eine Sicherheitsschmelzsicherung aufweist, wobei der Kondensator aus zumindest einem metallisierten, bandförmigen Film zur Verwendung während der Herstellung selbstheilender Kondensatoren ausgebildet wird, wobei die Metallisierung in Segmente unterteilt ist, die durch zumindest zwei längliche, metallfreie Bereiche begrenzt werden, dadurch gekennzeichnet, daß eine Anzahl der elektrisch leitfähigen Segmente (114, 115, 116; 214, 215, 216; 900') jeweils mit Hilfe eines länglichen, verengten Bereiches (150; 250; 950') in zumindest zwei Teile unterteilt ist, die in Diagonalrichtung in der Richtung des Films in Bezug aufeinander verschoben angeordnet sind, wobei der verengte Bereich, welcher die Sicherheitsschmelzsicherung bildet, so ausgebildet ist, daß die Verengung im Wesentlichen spiegelsymmetrischförmig in Bezug auf eine Linie (A-A; B-B; X-X) in der Ebene des Films ist, wobei diese Linie durch den engsten Teil des Schmelzsicherungsbereichs (150; 250; 950') hindurch geht, und senkrecht zur Längsrichtung des Schmelzsicherungbereiches verläuft.

7. Selbstheilender Kondensator nach einem der Ansprüche 5 bis 6, dadurch gekennzeichnet, daß ein Film mit einem zweiten metallisierten Film kombiniert ist, der kapazitiv inaktive Bereiche aufweist, die in Kontakt mit der Schmelzsicherungsfunktion des ersten Films angeordnet sind.

## Revendications

1. Film métallisé en forme de bande, ayant un fusible de sécurité, la métallisation étant utilisée comme un conducteur d'électricité, film sur lequel la métallisation est subdivisée en un certain nombre de segments métallisés conducteurs de l'électricité, séparés par des régions exemptes de métal, caractérisé en ce qu'un certain nombre des segments (114, 115, 116; 214, 215, 216; 900') conducteurs de l'électricité sont subdivisés chacun en au moins deux parties décalées en diagonale l'une par rapport à l'autre au moyen d'une région (150 ; 250 ; 950') oblongue resserrée, cette région formant un fusible, la région étant disposée de manière que le resserrement soit conformé sensiblement symétriquement comme dans un miroir par rapport à une droite (A - A; B - B; X - X) dans le plan du film, cette droite passant par la partie la plus étroite du fusible (150 ; 250 ; 950') et étant perpendiculaire à la direction longitudinale du fusible (150 ; 250 ; 950').

2. Film métallisé en forme de bande, destiné à être utilisé dans la fabrication de condensateurs auto-cicatrisants, caractérisé en ce qu'il comprend au moins un fusible de sécurité suivant la revendication 1.

3. Film métallisé en forme de bande, destiné à être utilisé pour la fabrication de condensateurs auto-cicatrisants, le film comprenant au moins un fusible de sécurité, la métallisation étant subdivisée en segments bordés par au moins deux régions oblongues exemptes de métal, caractérisé en ce que au moins une région (120, 220) marginale exempte de métal est prévue dans la direction longitudinale du film, en ce que la première région oblongue exempte de métal a au moins trois parties, une première partie (117, 217), une deuxième partie (118, 218) et une troisième partie (119, 219), la région oblongue exempte de métal allant de la région (120, 220) marginale exempte de métal prévue le long du premier bord longitudinal du film à une seconde position se trouvant à une distance déterminée à l'avance du premier bord longitudinal du film, les première (117, 217) et troisième (119, 219) parties bordant la seconde partie s'étendant dans une direction qui n'est pas parallèle à la direction longitudinale du film en faisant ainsi un angle β avec la direction longitudinale du film et un angle α avec la deuxième partie (118, 218), ces parties étant mutuellement décalées en parallèle, et la deuxième partie (118, 218) s'étendant dans une direction sensiblement parallèle à la direction longitudinale du film, et en ce que la deuxième région (117', 118', 119'; 217', 218', 219') oblongue exempte de métal, qui a essentiellement la même forme, est décalée parallèlement dans la direction longitudinale du film par rapport à la première région oblongue, de sorte qu'il y a entre les régions (117, 118, 119; 217, 218, 219 et 117', 118', 119'; 217', 218', 219') oblongues essentiellement une première et une deuxième partie incurvée continue de connexion, chaque deuxième partie incurvée de la première région oblongue et une première partie incurvée de la deuxième région oblongue définissant entre elles une région (150 ; 250 ; 950') oblongue resserrée, région qui forme un fusible de sécurité.

4. Film suivant la revendication 3, caractérisé en ce que l'angle α entre deux parties de la région oblongue se suivant directement l'une après l'autre est de 90° ou supérieur à 90° et de préférence est compris entre 90° et 135°, et mieux encore entre 100° et 120°.

5. Condensateur bobiné ou multicouches auto-cicatrisant, caractérisé en ce qu'il comprend au moins un film métallisé en forme de bande suivant les revendications 2 à 4.

6. Condensateur auto-cicatrisant bobiné ou multicouches, comprenant au moins un fusible de sécurité, le condensateur étant formé à partir d'au moins un film métallisé en forme de bande qui est utilisé pendant la fabrication de condensateurs auto-cicatrisants, la métallisation étant subdivisée en segments bordés par au moins deux zones oblongues exemptes de métal, caractérisé par un certain nombre des segments (114, 115, 116; 214, 215, 216; 900') conducteurs de l'électricité, chacun subdivisé au moyen d'une région (150 ; 250 ; 950') oblongue resserrée en au moins deux parties décalées en diagonale dans la direction du film l'une par rapport à l'autre, la région resserrée qui constitue le fusible de sécurité étant disposée de façon que le resserrement soit conformé sensiblement d'une manière symétrique comme dans un miroir par rapport à une droite (A - A; B - B ; X - X) dans le plan du film, cette droite passant par la partie la plus étroite de la région (150 ; 250 ; 950') formant le fusible et étant perpendiculaire à la direction longitudinale de la région formant le fusible.

7. Condensateur auto-cicatrisant suivant l'une quelconque des revendications 5 à 6, caractérisé en ce qu'un film est combiné à un deuxième film métallisé, qui a des régions qui ne sont pas actives du point de vue capacitif et qui sont en contact avec la fonction de fusible du premier film.
